# EUROPEAN PATENT SPECIFICATION

(11) **EP 2 343 206 B1**
(45) Date of publication and mention of the grant of the patent: **19.09.2012**
(21) Application number: 11150377.7
(22) Date of filing: 07.01.2011
(51) Int. Cl.: B60J 7/02

(54) **A sliding roof mechanism for commercial vehicles**
Schiebedachmechanismus für Nutzfahrzeuge
Mécanisme de toit coulissant pour véhicules commerciaux

(30) Priority: 07.01.2010 TR 201000104
(43) Date of publication of application: 13.07.2011
(73) Proprietor: Tofas Turk Otomobil Fabrikasi Anonim Sirketi, 16250 Istanbul (TR)
(72) Inventor: Dedeoglu, Seref, 16369, Bursa (TR); Aydin, Yusuf, 16369, Bursa (TR)
(74) Representative: Dericioglu, Ekin

(56) References cited:
- DE-A1- 3 544 941
- DE-A1- 10 317 868
- US-A- 4 272 121
- US-A1- 2009 243 333

## Description

### Field of the Invention

The present invention relates to a sliding roof mechanism which enables tall products such as refrigerator, ladders to be carried by enabling the roof of load compartment to be opened in commercial vehicles.

A sliding roof mechanism according to the preamble of claim 1 is disclosed in DE 103 17 868.

### Background of the Invention

Commercial vehicle is the general name of vehicles which are produced and used for load-carrying and passenger transportation. These vehicles are classified as light, medium-sized, heavy commercial vehicles according to their transport capacities and maximum weights. Commercial vehicles with gross vehicle weight less than 3500kg constitute the group of "light commercial vehicles".

Market share of light commercial vehicles increases with each passing day owing to their convenience for urban use by means of their small size and compliance with various applications. These vehicles are usually used for load-carrying. Cargo volume capacities of light commercial vehicles become insufficient as sizes of the load to be carried enlarge. In such cases, vehicles with larger capacities are needed. And these vehicles lead to difficulties in urban use. For example, medium-sized commercial vehicles are needed when it is desired to transport a refrigerator bought from a store and these vehicles cannot enter narrow streets. Transport of tall loads such as refrigerator is frequently carried out by pickup trucks but the fact that the bodies of the pickup trucks are open causes the usage areas of them to be limited.

The German patent document no. DE10304933 discloses an opening system of a rear loading cover for station wagon (family-type) or light commercial vehicles. The loading cover consists of a rear cover and an upper cover which opens by sliding towards the top of the vehicle. By means of this mechanism, the loading process becomes easier and high products are enabled to be loaded while the upper cover is open.

The United States patent document no. US2004140689 discloses a roof mechanism for rear loading spaces of station wagon, SUV or light commercial vehicles. Pieces composing the rear part uncover the back of the vehicle by being folded by means of a mechanism and turn the vehicle body into a structure like a pick-up body. Thus, loads height of which goes beyond the height of the vehicle roof can be transported as well.

### Summary of the Invention

The objective of the present invention is to realize a sliding roof mechanism which enables tall loads to be carried for light commercial vehicles.

Another objective of the invention is to realize a cost-efficient sliding roof mechanism for light commercial vehicles.

### Detailed Description of the Invention

The sliding roof mechanism realized to fulfill the objectives of the present invention is illustrated in the accompanying figures, in which:

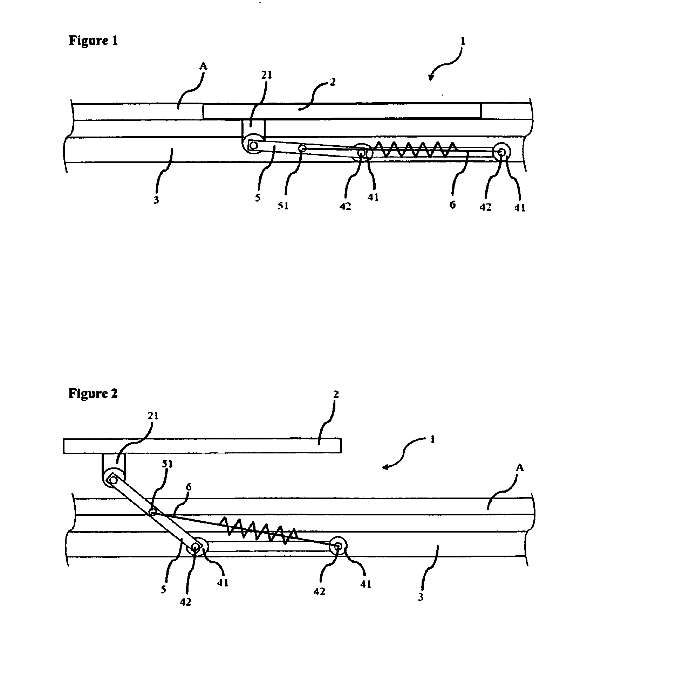

Figure 1 is the sectional view of the inventive sliding roof mechanism in closed position.
Figure 2 is the sectional view of the inventive sliding roof mechanism in open position.

The components illustrated in the figure are each given a reference number where the numbers refer to the following:
1- Sliding roof mechanism
2- Cover
   21-Connection extension
3- Rail
4- Slideway
   41-Wheel
   42-Connection protrusion
5- Rod
   51-Hook
6- Spring

### A: Vehicle Roof

The inventive sliding roof mechanism (1) essentially comprises:
- at least one cover (2) which is located on the vehicle roof (A);
- at least one rail (3) which is fixed to the vehicle roof (A), on which the cover (2) moves;
- at least one slideway (4) which moves in the rail (3);
- at least one rod (5) one end of which is connected to the cover (2) and the other is connected to the slideway (4) and
- at least one spring (6) one end of which is connected to the rod (5) and the other is connected to the slideway (4).

There is an opening having a width equal with the cover (2) in the vehicle roof (A). The cover (2) settles onto this opening. There is at least one connection extension (21) on the lower surface of the cover (2), in other words on the surface thereof facing into the vehicle. The cover (2) is connected to the rod (5) by passing a pin through this connection extension (21) and thus it enables the cover (2) to move together with the rod (5). In the preferred embodiment of the invention, there is a cord made of an elastic material around the cover (2). This cord surrounds the cover (2) and prevents water leakage into the vehicle from the sides of the cover (2) and the noises arising from vibration of the cover (2), by squeezing between the vehicle roof (A) and the cover (2) when the cover (2) is closed. In another embodiment of the invention, the cord is fixed to the vehicle roof (A) and the cover (2) is disposed on the cord.

At least one rail (3) is fixed to one of the sides of the aperture where the cover (2) settles. The rail (3) preferably has "U" profile and it is made of a metal material. The slideway (4) can move along the rail axis in the cavity within the rail (3). Length of the rail (3) is approximately two times as long as the cover (2). Thus, the cover (2) is closed when the slideway (4) is in the corner of the aperture i.e. at the end of the rail (3); the cover (2) is opened when the slideway (4) reaches the middle of the rail (3). By means of this motion of the slideway (4), the cover (2) covers and opens the aperture on the vehicle roof (A).

The slideway (4) has at least two wheels (41) which enable the rail (3) to move on thereof and at least two connection protrusions (42) at least one of which is connected to the rod (5) and the other is connected to the spring (6). The wheels (41) are fixed to two ends of the slideway (4). The connection protrusions (42) are in cylindrical form and they are fixed to the rod (5) and the spring (6). In the preferred embodiment of the invention, the rod (5) is fixed to the connection protrusion (42) close to the opening direction of the cover (2) whereas the spring (6) is fixed to the distant connection protrusion (42).

One end of the rod (5) is connected to the connection extension (21) on the cover (2) and the other is connected to the connection protrusion (42) on the slideway (4). Both ends of the rod (5) are cylindrical and the rod (5) can turn around these connections. There is at least one hook (51) on the rod (5). One end of the spring (6) fits into the hook (51) and it is fixed to there. Other end of the spring (6) is fixed to the connection protrusion (42) on the hook (4). Thus the spring (6) tightens and extends by the motion of the rod (5) and prevents damages that may occur during fast closures by slowing down the cover (2) while the cover (2) is being opened/closed.

Within the framework of this basic concept, it is possible to develop various embodiments of the inventive sliding roof mechanism (1). The invention can not be limited to the examples described herein; it is essentially according to the claims.

## Claims

1. A sliding roof mechanism (1) which enables tall products such as refrigerator, ladders to be carried in commercial vehicles comprising
- at least one cover (2) which is located on the vehicle roof (A);
- at least one rail (3) which is fixed to the vehicle roof (A), on which the cover (2) moves;
- at least one slideway (4) which moves in the rail (3);
- at least one rod (5) one end of which is connected to the cover (2) and the other is connected to the slideway (4)
**characterized by**
- at least one spring (6) which tightens and extends by the motion of the rod (5), one end of which is fixed to the rod (5) and the other is fixed to the slideway (4); and cover (2) which has at least one connection extension (21) on the surface thereof facing into the vehicle.

2. A sliding roof mechanism (1) according to Claim 1, **characterized by** at least one slideway (4) which has at least two wheels (41) that enable the rail (3) to move on thereof and at least two connection protrusions (42) at least one of which is connected to the rod (5) and the other is connected to the spring (6).

3. A sliding roof mechanism (1) according to any of the preceding claims, **characterized by** rod (5) which has at least one hook (51) on thereof, one end which is connected to the connection extension (21) and the other is connected to the connection protrusion (42).

## Patentansprüche

1. Eine Schiebedacheinrichtung (1), die es ermöglicht, hochgewachsene Produkte wie Kühlschränke, Leiter in Nutzfahrzeugen zu transportieren, umfassend- mindestens eine Abdeckung (2), die auf dem Fahrzeugdach (A) angeordnet wird;- mindestens eine Schiene (3), die an dem Fahrzeugdach befestigt wird, an dem die Abdeckung (2) sich bewegt; - zumindest eine Gleitbahn (4), die sich in der Schiene (3) bewegt;- mindestens eine Stange (5), deren eine Ende an der Abdeckung (2) und andere Ende an der Gleitbahn (4) befestigt ist,**gekennzeichnet durch** - mindestens eine Feder (6), die **durch** die Bewegung der Stange (5) fest anzieht und sich ausdehnt, deren eine Ende an der Stange (5) und andere Ende an der Gleitbahn (4) befestigt ist; und eine Abdeckung (2), die zumindest eine Anschlusserweiterung (21) auf der Oberfläche davon aufweist, welche ins Fahrzeug hinein zugewandt ist.

2. Eine Schiebedacheinrichtung (1) nach Anspruch 1, **gekennzeichnet durch** zumindest eine Gleitbahn (4), welche aufweist, zumindest zwei Räder (41), die es ermöglichen die Schienen darauf zu bewegen und mindestens zwei Anschlussvorsprünge (42), zumindest einer von denen an die Stange (5) befestigt und der andere an die Feder (6) befestigt ist.

3. Eine Schiebedacheinrichtung (1) nach einem der vorangehenden Ansprüche, **gekennzeichnet durch** eine Stange (5), die auf sich selbst zumindest einen Haken (51) aufweist und deren ein Ende an die Anschlusserweiterung (21) und das andere Ende an den Anschlussvorsprung (42) angeschlossen ist.

## Revendications

1. Mécanisme de toit ouvrant permettant de porter les produits tels que réfrigérateurs, échelles dans les véhicules commerciales, **caractérisé en ce qu'**il comporte :
- Au moins une couverture (2) se trouvant sur le toit (A) de véhicule,
- Au moins un rail (3) fixé au toit de véhicule (A) sur lequel se déplace la couverture (2),
- Au moins une glissière (4) déplaçant dans le rail (3),
- Au moins une tige (5) dont une extrémité est solidaire de la couverture (2) et l'autre est solidaire de la glissière (4),
- Au moins un ressort fixe (6) dont une extrémité est solidaire d'une tige (5) et l'autre est solidaire de la glissière (4) qui est tendu et prolongé par le mouvement de la tige (5), et comportant une couverture (2) possédant au moins une extension sur la surface vers l'intérieur du véhicule

2. Mécanisme de toit ouvrant selon la revendication 1, **caractérisé par** au moins une glissière (4) comportant au moins deux roues (41) permettant le mouvement du rail (3) sur ladite glissière et au moins deux saillies de connexion (42) dont l'une est solidaire de la tige (5) et l'autre est solidaire du ressort (6)

3. Mécanisme de toit ouvrant selon l'une de revendications précédentes, **caractérisé en ce qu'**il comporte au moins un crochet au-dessus dont une extrémité est solidaire de l'extension de connexion (21) et l'autre est solidaire de la glissière (42).
